# EUROPEAN PATENT APPLICATION

(11) **EP 2 226 478 A1**
(43) Date of publication of application: **08.09.2010**
(21) Application number: 08855852.3
(22) Date of filing: 02.12.2008
(51) Int. Cl.: F01N 3/08, F01N 3/28

(54) **CONSTRUCTION MACHINE**

(30) Priority: 03.12.2007 JP 2007312296
(71) Applicant: Hitachi Construction Machinery Co., Ltd, Tokyo 112-0004 (JP)
(72) Inventor: TAKESHITA, Seiichiro, Tsuchiura-shi Ibaraki 300-0013 (JP); WATANABE, Osamu, Tsuchiura-shi Ibaraki 300-0013 (JP); IKEDA, Kunihiko, Tsuchiura-shi Ibaraki 300-0013 (JP); ABE, Toshihiro, Tsuchiura-shi Ibaraki 300-0013 (JP)
(74) Representative: Hatzmann, Martin
(86) International application number: PCT/JP2008/071886
(87) International publication number: WO 2009/072494

(57) **Abstract**

Provided is a construction machine, which can suppress a rise in the temperature of a liquid reducing agent in a liquid reducing agent tank. The construction machine is provided, within an engine compartment 6, with plural heat exchangers including an oil cooler 27, a cooling fan 32 arranged opposite these heat exchangers to produce a cooling airflow for promoting heat dissipation from these heat exchanger, and a liquid reducing agent tank 40 for storing a liquid reducing agent to be supplied to an NOx reduction catalyst. The liquid reducing agent tank 40 is arranged upstream of the plural heat exchangers as viewed in a flowing direction of the cooling airflow.

## Description

### Technical Field

This invention relates to a construction machine provided, within an engine compartment, with a liquid reducing agent tank for storing a liquid reducing agent to be supplied to an NOx reduction catalyst.

### Background Art

As one of conventional technologies for detoxifying NOx in exhaust gas from a diesel engine, there is a technology that arranges an NOx reduction catalyst in an exhaust pipe and an aqueous urea solution is sprayed as a liquid reducing agent onto the NOx reduction catalyst to decompose NOx into harmless nitrogen gas and water. As a conventional construction machine adopting this technology, there is one disclosed in Patent Document 1. In this conventional construction machine, a liquid reducing agent tank in which a liquid reducing agent is stored is arranged at a position in a revolving upperstructure where the liquid reducing agent tank can be heated, specifically in a neighborhood of an engine, a hydraulic motor or the like. By heat dissipated from the engine or hydraulic motor, the liquid reducing agent frozen in the liquid reducing agent tank can be thawed or heated.
Patent Document 1: JP-A-2003-20936

### Disclosure of the Invention

### Problem to Be Solved by the Invention

The construction machine disclosed in Patent Document 1 is effective in such a cold climate as the liquid reducing agent freezes. However, use of a construction machine is not limited to under such a cold climate. Where a job site is not in such a cold climate as the liquid reducing agent freezes, the liquid reducing agent is conversely overheated and degraded.

An object of the present invention is, therefore, to provide a construction machine, which can suppress a rise in the temperature of a liquid reducing agent in a liquid reducing agent tank.

### Means for Solving the Problem

To achieve the above-mentioned object, the present invention is constructed as will be described next.

[1] The present invention is **characterized in that**, in a construction machine provided, within an engine compartment, with a heat exchanger, a cooling fan arranged opposite the heat exchanger to produce a cooling airflow for promoting heat dissipation from the heat exchanger, and a liquid reducing agent tank for storing a liquid reducing agent to be supplied to an NOx reduction catalyst, the liquid reducing agent tank is arranged upstream of the heat exchanger as viewed in a flowing direction of the cooling airflow.

According to the present invention constructed as described above, the liquid reducing agent tank is allowed to release heat to the cooling airflow before it passes through the heat exchanger. It is, therefore, possible to suppress a rise in the temperature of the liquid reducing agent in the liquid reducing agent tank.

[2] The present invention may also be **characterized in that** in the invention described in [1], the construction machine further comprises a supply port arranged in a lower part of the liquid reducing agent tank to guide the liquid reducing agent to the NOx reduction catalyst, and a heating device for enabling to heat the lower part.

According to the present invention constructed as described above, the liquid reducing agent can be heated by the heating device so that, even when the construction machine is used in such a cold climate as the liquid reducing agent freezes, heating can be performed to thaw the liquid reducing agent frozen in the liquid reducing agent tank or to prevent freezing of the liquid reducing agent. Further, the liquid reducing agent so thawed can be efficiently guided to the supply port because the heating device is arranged to enable the heating of the lower part of the liquid reducing agent tank where the supply port is arranged.

[3] The present invention may also be **characterized in that** in the invention described in [2], the construction machine further comprises a lower limit temperature detection means for detecting that a temperature of the liquid reducing agent stored in the liquid reducing agent tank is a preset lower limit temperature, an upper limit temperature detection means for detecting that the temperature of the liquid reducing agent is a preset upper limit temperature, and a control means for controlling the heating device based on detection results by the lower limit temperature detection means and detection results by the upperlimit temperature detection means,wherein the control means heats the liquid reducing agent at or above the lower limit temperature when the temperature of the liquid reducing agent is equal to or lower than the upper limit temperature.

According to the present invention constructed as described above, the temperature of the liquid reducing agent is maintained within the range of from the lower limit temperature to the upper limit temperature, and therefore, the liquid reducing agent can be maintained in a state that it is neither caused to freeze nor overheated.

[4] The present invention may also be **characterized in that** in the invention described in [2] or [3], the liquid reducing agent tank and the heating device are detachably secured as discrete elements on a main body of the construction machine that defines the engine compartment.

According to the present invention constructed as described above, the liquid reducing agent tank is detachably secured on the main body of the construction machine that defines the engine compartment, and therefore, replenishment of the liquid reducing agent to the liquid reducing agent tank can be conducted by taking the liquid reducing agent tank out of the engine compartment. If the replenishment of the liquid reducing agent is conducted in the engine compartment, there is a potential problem that the liquid reducing agent may be scattered or spilled to make members and equipment, which are located around the liquid reducing agent tank, prone to corrosion. This potential problem can be eliminated by conducting the replenishment of the liquid reducing agent to the liquid reducing agent tank outside the engine compartment.

Further, the liquid reducing agent tank and the heating device are detachably secured as discrete elements on the main body of the construction machine, and therefore, the user of the construction machine can attach or detach the heating device depending on the climate of a job site. If the heating device is offered as optional parts, it is possible to avoid incurring unnecessary and wasteful expenditure to a purchaser of the construction machine who does not need a heating device 80.

[5] In the invention described in any one of [1] or [4], the liquid reducing agent tank may preferably be formed of a corrosion-resistant material.

### Advantageous Effects of the Invention

According to the present invention, the liquid reducing agent tank is allowed to release heat to a cooling airflow before it passes through the heat exchanger as mentioned above. It is, therefore, possible to suppress a rise in the temperature of the liquid reducing agent in the liquid reducing agent tank. Accordingly, the liquid reducing agent in the liquid reducing agent tank can be suppressed in degradation through overheating.

### Modes for Carrying out the Invention

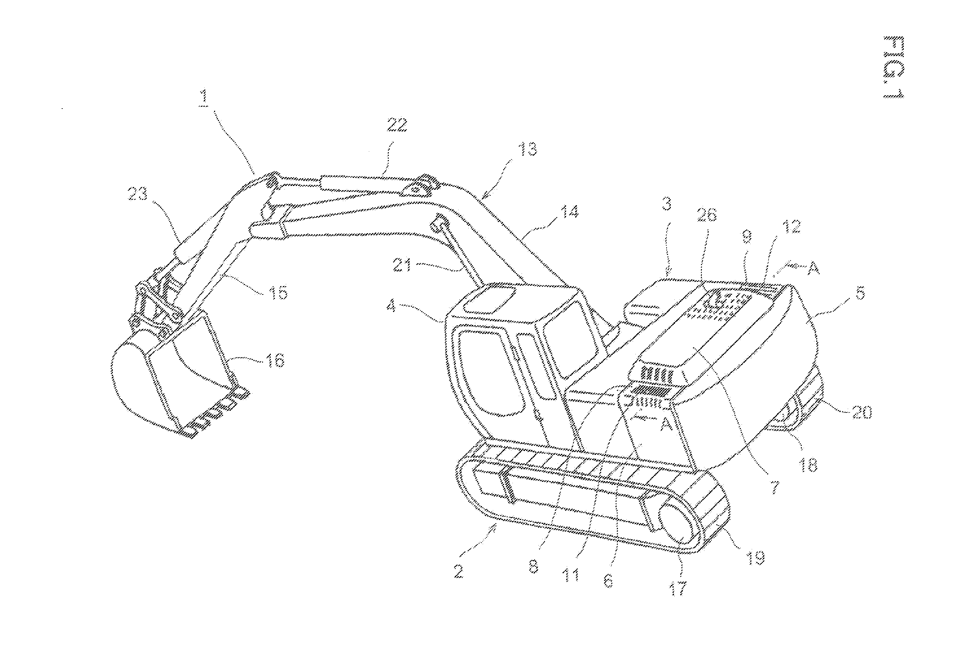

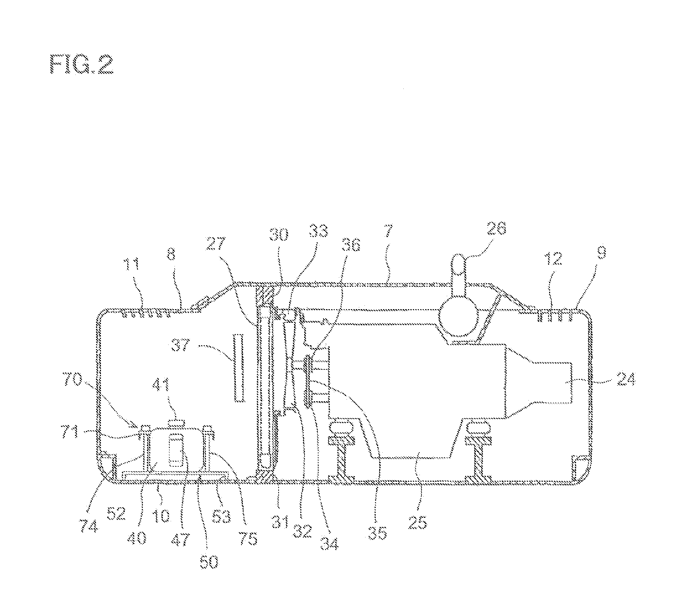

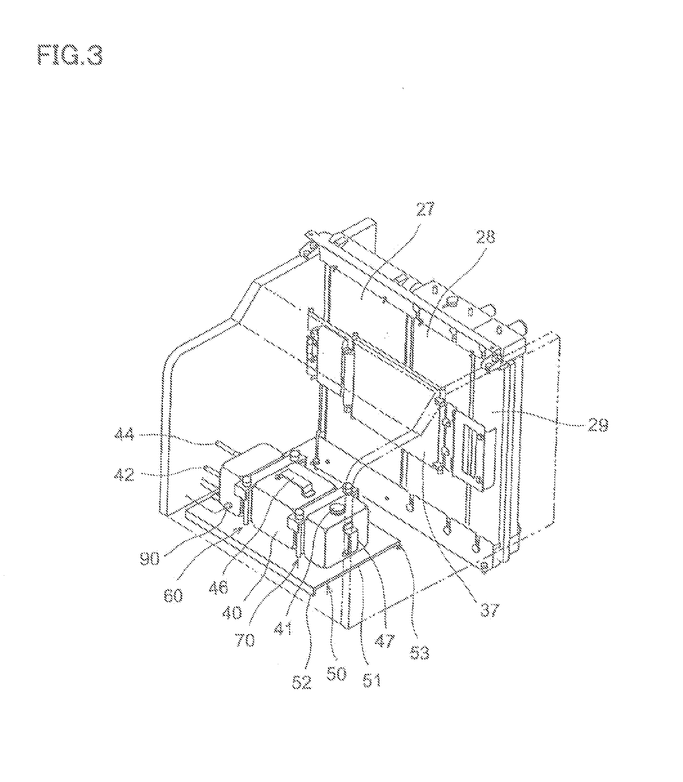

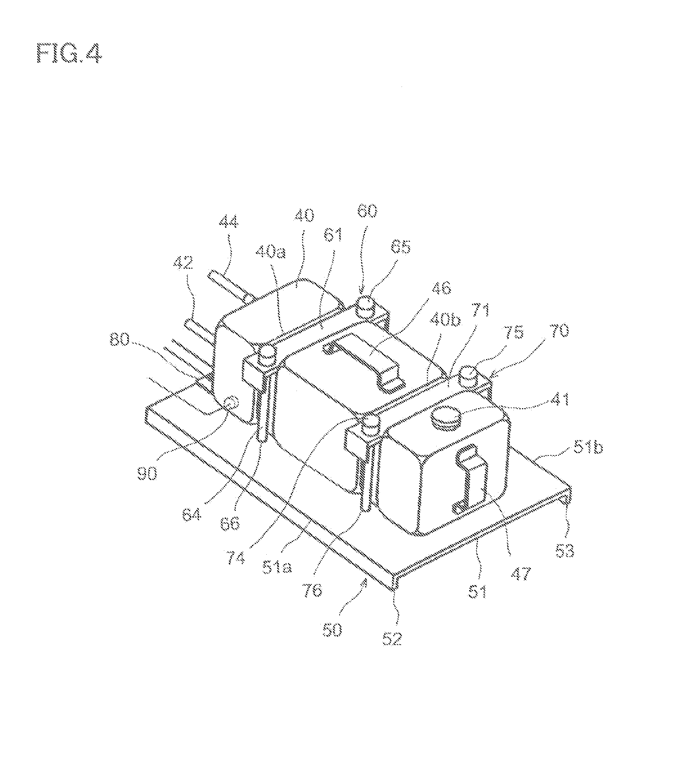

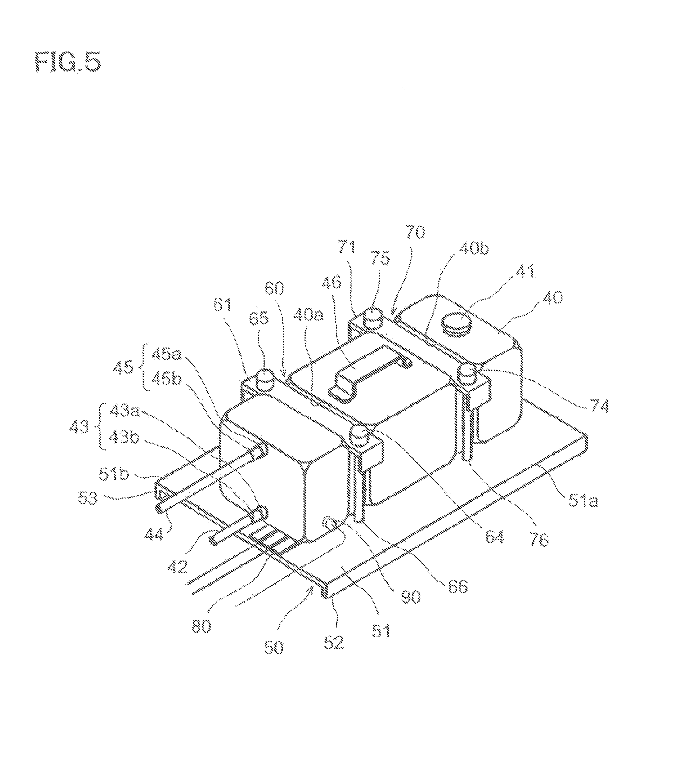

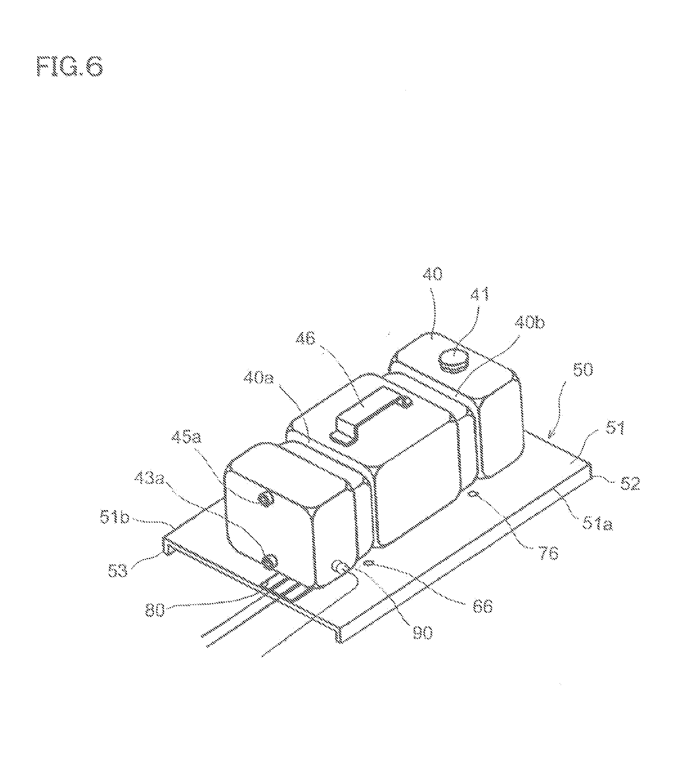

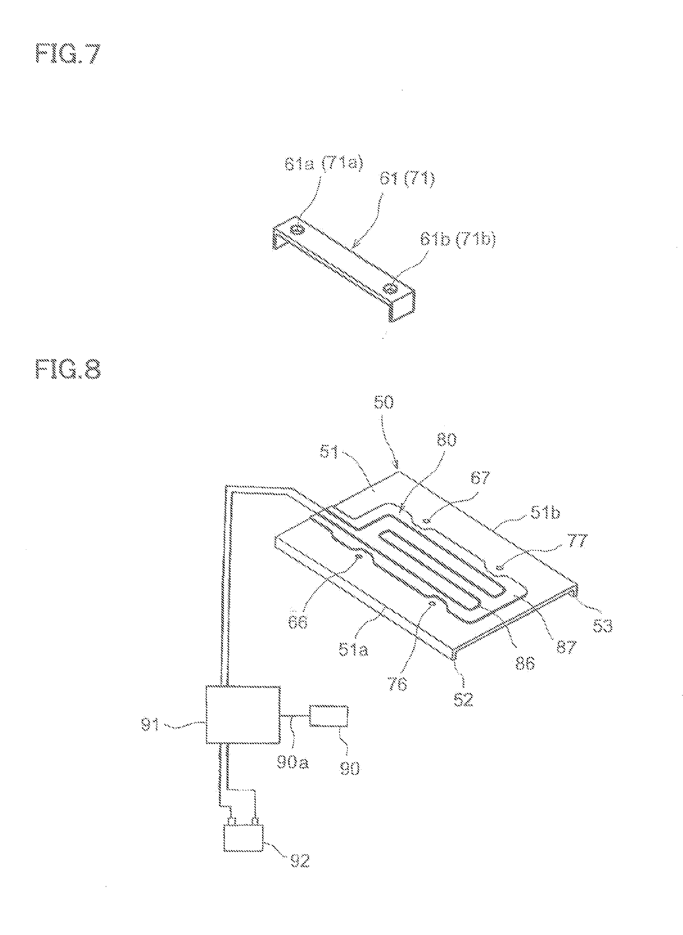

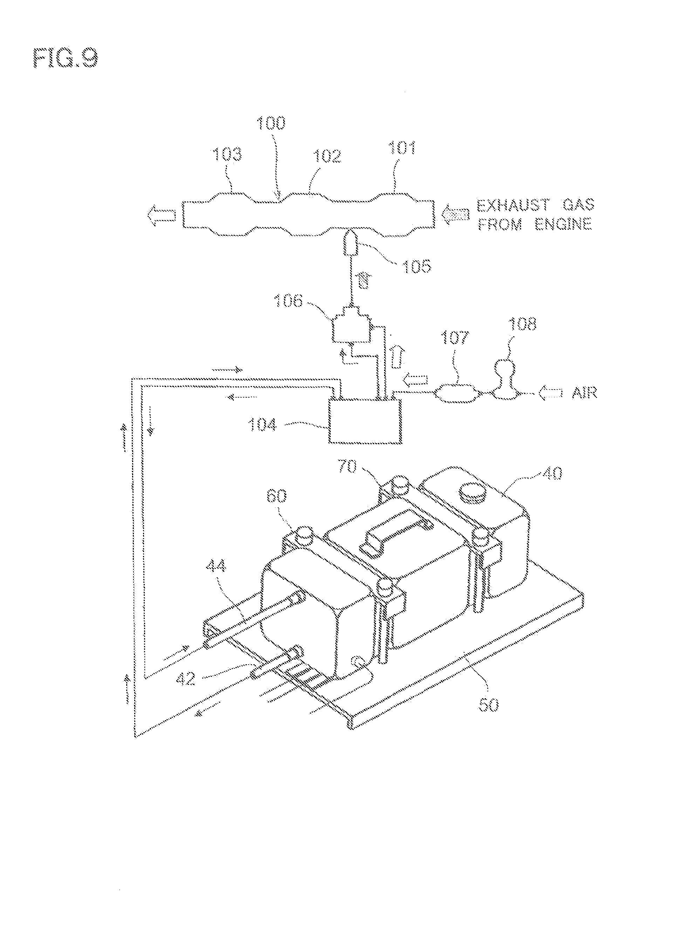

With reference to FIG. 1 through FIG. 9, a description will be made about a construction machine according to one embodiment of the present invention. FIG. 1 is a rear and upper left perspective view of a hydraulic excavator as the construction machine according to the one embodiment of the present invention. FIG. 2 is a view showing a layout within an engine compartment as seen in the direction of arrows A-A of FIG. 1. FIG. 3 is a rear and upper left perspective view of the layout of a liquid reducing agent tank and its periphery in the engine compartment. FIG. 4 is an enlargedperspective view of the liquid reducing agent tank and an installation base shown in FIG. 2. FIG. 5 is an enlarged, front and upper left perspective view of the liquid reducing agent tank and installation base shown in FIG. 2. FIG. 6 is an enlarged, front and upper left view of the liquid reducing agent tank and installation base shown in FIG. 5, with holding members and bolts of fastening means, a supply-side piping and a return-side piping having been removed from the liquid reducing agent tank and installation base. FIG. 7 is a perspective view of the holding member which each fastening means is provided with. FIG. 8 is a diagram depicting a heating device and a controller and the like for controlling the heating device. FIG. 9 is a diagram illustrating an operation that supplies the liquid reducing agent from the liquid reducing agent tank to an NOx reduction agent.

The construction machine according to this embodiment, specifically the hydraulic excavator 1 shown in FIG. 1 is provided with a travel base 2 enabling self-propelling of the hydraulic excavator 1, a revolving upperstructure 3 rotatably mounted as a main body of the hydraulic excavator 1 on the travel base 2, and a working mechanism 13 secured to a central front part of the revolving upperstructure 3 and having a boom 14, arm 15 and bucket 16.

The travel base 2 is constructed to travel by driving crawler tracks 19,20 while using a pair of travel motors 17, 18 (both of which are hydraulic motors) as drive sources. The revolving upperstructure 3 is rotatable by using an unillustrated revolving motor (hydraulic motor) as a drive source. In the working mechanism 13, the boom 14, arm 15 and bucket 16 are each independently pivotable in an up-and-down direction by extension or retraction of a boom cylinder 21, arm cylinder 22 and bucket cylinder 23 (all of which are hydraulic cylinders).

On a left front part of the revolving upperstructure 3, an operator's cab 4 is mounted. On a rear end portion of the revolving upperstructure 3, a counterweight 5 is mounted. In front of this counterweight 5, an engine compartment 6 is mounted. Arranged within the engine compartment 6 are, as shown in FIG. 2, a hydraulic pump 24 as a hydraulic source for the travel motors 17,18, revolvingmotor, boom cylinder 21, arm cylinder 22 any bucket cylinder 23, and also a diesel engine 25 for driving the hydraulic pump 24. The diesel engine 25 is provided with an exhaust pipe 26. This exhaust pipe 26 juts out to above the engine compartment 6 through a covermember 7 that extends over the diesel engine 25. Within the exhaust pipe 26, an NOx reduction catalyst 100 (see FIG. 9) is arranged.

Within the engine compartment 6, plural heat exchangers, specifically an oil cooler 27, radiator 28 and air cooler 29 (which may hereinafter be called "the oil cooler 27 and the like")are arranged side by side in a front-to-rear direction in addition to the hydraulic pump 24 and diesel engine 25. Both above and below the oil cooler 27 and the like, partition members 30,31 are arranged, respectively, such that the space inside the engine compartment 6 is divided by these partition members 30,31 and the oil cooler 27 and the like. A cooling fan 32 is arranged opposite the oil cooler 27 and the like. A shroud 33 is arranged between the oil cooler 27 and the like and the cooling fan 32. An air inlet 11 is formed through a top wall portion 8 defining a left-side top wall of the revolving upperstructure 3, and an exhaust outlet 12 is formed through a top wall portion 9 defining a right-side top wall of the revolving upperstructure 3. By power transmitted from an output shaft (not shown) of the diesel engine 25 via a crank pulley 34, fan belt 35 and fan pulley 36, the cooling fan 32 is rotated to produce a cooling airflow that passes through or by the air inlet 11, oil cooler 27 and the like, shroud 33 and cooling fan 32 in this order and is exhaustedthrough the exhaust outlet 12. As a result, the dissipation of heat from the oil cooler 27 and the like is promoted.

An air-conditioning condenser 37 is arranged on a left side of the oil cooler 27 and the like, that is, upstream of the oil cooler 27 and the like as viewed in the flowing direction of the cooling airflow. Arranged upstream of the air-conditioning condenser 37 is a liquid reducing agent tank 40 in which the liquid reducing agent to be supplied to the NOx reduction catalyst 100 (see FIG. 9) is stored.

As depicted in FIG. 4, the liquid reducing agent tank 40 is provided in a rear part of a top wall thereof (on a lower right side in FIG. 4) with a replenishing port, which is hermetically closed by a cap 41. For example, a 32.5% aqueous urea solution ("AdBlue") is stored as the liquid reducing agent in the liquid reducing agent tank 40. The liquid reducing agent tank 40 itself and cap 41 are formed of a corrosion-resistant material, for example, stainless steel to prevent corrosion which would otherwise be caused by deposition of the liquid reducing agent.

As illustrated in FIG. 5, the liquid reducing agent tank 40 is provided in a lower part of the front wall thereof (on a lower left side in FIG. 5) with a supply port for guiding the liquid reducing agent to the NOx reduction catalyst 100, and to this supply port, a supply-side piping 42 is connected by a supply-side quick coupler 43. This supply-side quick coupler 43 has a supply-port-side connection pipe 43a and a piping-side connection pipe 43b. The supply-port-side connection pipe 43a is attached to the liquid reducing agent tank 40 such that the supply port can be opened or closed, and the piping-side connection pipe 43b is arranged on an end portion of the supply-side piping 42. These supply-port-side connection pipe 43a and piping-side connection pipe 43b are constructed such that they can be connected to or disconnected from each other. The supply-port-side connection pipe 43a is constructed such that it opens the supply port in a state that it is connected with the piping-side connection pipe 43b but it closes the supply port in a state that it is disconnected from the piping-side connection pipe 43b.

The liquid reducing agent tank 40 is provided, on the front wall thereof and above the supply port, with a return port. To this return port, a return-side piping 44 is connected by a return-side quick coupler 45. This return-side quick coupler 45 is constructed similar to the supply-side quick coupler 43, and has a return-port-side connection pipe 45a and a piping-side connection pipe 45b. The piping-side connection pipe 45b is arranged on an end portion of the return-side piping 44.

As shown in FIG. 2, an installation base 50 is fixed by welding on a bottom portion 10 of the revolving upperstructure 3 that forms a floor of the engine compartment 6. As depicted in FIGS. 4 and 5, the liquid reducing agent tank 40 is detachably mounted on the installation base 50 by fastening means 60,70. The installation base 50 has a mount portion 51 in the form of a rectangular plate, on which the liquid reducing agent tank 40 is mounted. A pair of edge portions 51a, 51b of the mount portion 51, said edge portions 51a, 51b being on longer sides of the mount portion 51, are arranged in parallel to each other and extend in a left-to-right direction. From the respective ones of the paired edge portions 51a, 51b, spacing portions 52, 53 extend to form a spacing between the mount portion 51 and the bottom portion 10. The fastening means 60 fastens a front part of the liquid reducing agent tank 40 to the mount portion 51, and is composed of a holding member 61 arranged on the top wall of the liquid reducing agent tank 40, a pair of bolts 64,65, bores 61a,61b formed at opposite, left and right ends of the holding member 61 and permitting insertion of the paired bolts 64, 65 therethrough, and a pair of tapped holes 66,67 (see FIG. 8) formed in the mount portion 51 of the installation base 50 and permitting threaded engagement of the paired bolts 64,65 therewith. The fastening means 70 fastens a rear part of the liquid reducing agent tank 40 to the mount portion 51 by a similar construction as the fastening means 60, and is composed of a holding member 71, apair of bolts 74, 75, bores 71a, 71b formedthrough the holding member 71, and a pair of tapped holes 76,77 (see FIG. 8) formed in the installation base 50.

Restriction grooves 40a,40b (see FIG. 6) are formed in the top wall of the liquid reducing agent tank 40. The holding member 61 is fitted in the restriction groove 40a, while the holding member 71 is fitted in the restriction grove 40b. Longitudinal positional displacements of the holding members 61, 71 relative to the liquid reducing agent tank 40 are, therefore, prevented. As a consequence, longitudinal positional displacements of the liquid reducing agent tank 40 relative to the installation base 50 are prevented. On the other hand, lateral positional displacements of the liquid reducing agent tank 40 relative to the installation base 50 are prevented by the shank profiles of the bolts 64,65,74,75.

As depicted in FIG. 4, handles 46,47 are fixed by welding on a central part of the top wall and the rear wall of the liquid reducing agent tank 40, respectively.

As shown in FIG. 5, a heating device 80 is arranged on the mount portion 51 of the installation base 50 such that a lower part of the liquid reducing agent tank 40 can be heated. As depicted in FIG. 8, this heating device 80 is formed of a waterproofed sheet 87 and a heating wire 86 embedded in the sheet 87 to permit conversion of electrical current into heat. This sheet 87 is formed in substantially the same profile as a bottom wall of the liquid reducing agent tank 40. As illustrated in FIGS. 5 and 6, an upper surface of the sheet 87 is in contact with the bottom wall of the liquid reducing agent tank 40.

As depicted in FIGS. 4, 5 and 6, a temperature sensor 90 is arranged at the lower part of the liquid reducing agent tank 40, for example, at a lower part on a left side wall of the liquid reducing agent tank 40, said lower part being located between the supply port and the front-side fastening means 60 as viewed in the font-to-rear direction. This temperature sensor 90 detects a temperature of a lower portion of the liquid reducing agent, and outputs a detection signal (electrical signal) corresponding to the detected temperature. The detection signal is, as shown in FIG. 8, inputted to a controller 91 via an electrical wire 90a detachably connected to the temperature sensor 90. Although not illustrated in the figure, this controller 91 is equipped with a processing unit, RAM, ROM and an auxiliary storage unit, and is set to control the heating device 80 based on detection results by the temperature sensor 90.

A description will be made about a specific example of control of the heating device 80.

The pot life (usable time) and melting point of the liquid reducing agent (32.5% aqueous urea solution ("AdBlue")) in this embodiment are shown in Table 1.

**[Table 1] Pot Life and Melting Point of Liquid Reducing Agent**

| Storage temperature | Pot life |
|---|---|
| 0°C | ∞ |
| 10°C | 75 years |
| 20°C | 11 years |
| 30°C | 23 months |
| 40°C | 4 months |
| 50°C | 1 month |
| 60°C | 1 week |
| Melting point | -11°C |

Based on the properties of the liquid reducing agent as shown in the above table, control of the heating device 80 is performed such that electric power to be supplied from a power supply 92 to the heating wire 86 is maximized when a detection temperature by the temperature sensor 90 is equal to or lower than the melting point of -11°C as a lower limit temperature, the supply of electric power to the heating wire 86 is stopped when a detection temperature is equal to or higher than 0°C (which is a temperature at which the usable time becomes infinitely great) as an upper limit temperature, and electric power of a value proportional to a detection temperature is supplied to the heating wire 86 in accordance with a proportional function, which has been stored beforehand in the auxiliary storage unit and defines a correlation between detection temperatures and electric powers to be supplied, when a detection temperature is in a temperature range higher than the lower limit temperature but lower than the upper limit temperature. As a result of the control, the liquid reducing agent stored in the liquid reducing agent tank 40 is heated at the lower limit temperature or higher when the temperature of the liquid reducing agent is equal to or lower than the upper limit temperature. In other words, the controller 91 is set to constitute a lower limit temperature detection means for detecting that the temperature of the liquid reducing agent stored in the liquid reducing agent tank 40 is the preset lower limit temperature and an upper limit temperature detection means for detecting that the temperature of the liquid reducing agent stored in the liquid reducing agent tank 40 is the preset upper limit temperature. Further, the controller 91 is set such that it functions as a control means for controlling the heating device 80 based on detection results by the lower limit detection means and detection results by the upper limit detection means.

As illustrated in FIG. 9, the liquid reducing agent tank 40 is connected to a feeder 104 via the supply-side piping 42. This feeder 104 serves to deliver the liquid reducing agent to a spray device 105 which in turn injects the liquid reducing agent onto the NOx reduction catalyst 100. Between the feeder 104 and the spray device 105, an air addition device 106 is interposed to mix air into the liquid reducing agent. Into this air addition device 106, air delivered by an air compressor 108 from an air tank 107 is introduced via the feeder 104. Any surplus liquid reducing agent at the feeder is guided through the return-side piping 44 such that it returns to the liquid reducing agent tank 40. It is to be noted that the means for supplying the liquid reducing agent onto the NOx reduction catalyst 100 can be any means insofar as it can spray the liquid reducing agent and can hence be one not provided with any air addition device.

In the NOx reduction catalyst 100, a first oxidation catalyst 101, a selective reduction catalyst 102 (exhaust gas purification catalyst) and a second oxidation catalyst 103 are arrayed in this order from a side proximal to the diesel engine 25. The spray device 105 sprays the liquid reducing agent to between the first oxidation catalyst 101 and the selective reduction catalyst 102. The first oxidation catalyst 101 has a platinum catalyst and a soot filter, the reaction of "2NO+O₂→2NO₂" is conducted on the platinum catalyst, and the reaction of "C+2NO₂→CO₂+2NO" is conducted in the soot filter. On the selective reduction catalyst 102, hydrolysis of the sprayed liquid reducing agent (urea), "CO(NH₂)₂+H₂O→2NH₃+CO₂", and reduction with ammonia, "NO+NO₂+2NH₃→2N₂+3H₂O", are conducted. On the second oxidation catalyst 103, oxidation of ammonia still remaining after the selective reduction catalyst 102, "4NH₃+3O₂→2N₂+6H₂O", is conducted so that the remaining ammonia is detoxified. It is to be noted that the selective reduction catalyst 102 and the second oxidation catalyst 103 may be integrated together.

The hydraulic excavator 1 of this embodiment constructed as described above can bring about the following advantageous effects.

In the hydraulic excavator 1 according to this embodiment, the liquid reducing agent tank 40 is allowed to release heat to a cooling airflow before it passes through or by the oil cooler 27, radiator 28, air cooler 29 and air-conditioning condenser 37. It is, therefore, possible to suppress a rise in the temperature of the liquid reducing agent in the liquid reducing agent tank 40. Accordingly, the liquid reducing agent in the liquid reducing agent tank 40 can be suppressed in degradation through overheating.

In the hydraulic excavator 1 according to this embodiment, the liquid reducing agent can be heated by the heating device 80 so that, even when the hydraulic excavator 1 is used in such a cold climate as the liquid reducing agent freezes, heating can be performed to thaw the liquid reducing agent frozen in the liquid reducing agent tank 40 or to prevent freezing of the liquid reducing agent.

In the hydraulic excavator 1 according to this embodiment, the liquid reducing agent so thawed can be efficiently guided to the supply port because the heating device 80 is arranged to enable heating the lower part of the liquid reducing agent tank 40 where the supply port is arranged.

In the hydraulic excavator 1 according to this embodiment, the temperature of the liquid reducing agent is maintained within the range of from the lower limit temperature to the upper limit temperature by the temperature sensor 90 and controller 91, and therefore, the liquid reducing agent can be maintained in a state that it is neither caused to freeze nor overheated.

In the hydraulic excavator 1 according to this embodiment, the liquid reducing agent tank 40 is detachably secured on the installation base 50 by the fastening means 60,70, and therefore, the replenishment of the liquid reducing agent to the liquid reducing agent tank 40 can be conducted by taking the liquid reducing agent tank 40 out of the engine compartment 6. If the replenishment of the liquid reducing agent is conducted in the engine compartment 6, there is the potential problem that the liquid reducing agent may be scattered or spilled to make the members and equipment, which are located around the liquid reducing agent tank 40, prone to corrosion. This potential problem can be eliminated by conducting the replenishment of the liquid reducing agent to the liquid reducing agent tank 40 outside the engine compartment 6.

In the hydraulic excavator 1 according to this embodiment, the heating device 80 is detachably secured by screw fastening on the installation base 50. Specifically, the liquid reducing agent tank 40 and heating device 80 are detachably secured as discrete elements on the revolving upperstructure 3 which is the main body of the hydraulic excavator 1. Therefore, the user of the hydraulic excavator 1 can attach or detach the heating device 80 depending on the climate of a job site. If the heating device 80 is offered as optional parts, it is possible to avoid incurring unnecessary and wasteful expenditure to a purchaser of the hydraulic excavator 1 who does not need a heating device 80.

In the hydraulic excavator 1 according to the above-described embodiment, the liquid reducing agent tank 40 and heating device 80 are detachably secured as discrete elements on the revolving upperstructure 3 which defines the engine compartment 6. It is, however, to be noted that the relationship between the liquid reducing agent tank and the heating device in the present invention is not limited to such a relationship and that the heating device may be detachably secured on the liquid reducing agent tank.

In the hydraulic excavator 1 according to the above-described embodiment, the cooling fan 32 is driven by powder transmitted from the diesel engine 25. However, the cooling fan in the present invention is not limited to such a construction, and may also be driven by power transmitted from a hydraulic motor or electric motor.

In the hydraulic excavator 1 according to the above-described embodiment, the temperature sensor 90 as a component of the lower limit temperature detection means and upper limit temperature detection means is arranged to directly detect the temperature of the lower part of the liquid reducing agent. However, the temperature sensor 90 may also be arranged such that the temperature of the lower portion of the liquid reducing agent is indirectly detected by detecting the temperature of a lower part of the liquid reducing agent tank 40. When the temperature sensor 90 is arranged as mentioned above, its control is performed as will be described next to control the heating device 80 in a similar manner as in the above-described embodiment. Described specifically, the lower limit temperature - which is the detection temperature at which electric power to be supplied from the power supply 92 to the heating wire 86 is maximized - is set at a temperature of the lower part of the liquid reducing agent tank 40 when the temperature of the lower portion of the liquid reducing agent is its melting point, i.e., -11°C, while the upper limit temperature - which is the detection temperature at which the supply of electric power to the heating wire 86 is stopped - is set at a temperature of the lower part of the liquid reducing agent tank 40 when the temperature of the lower portion of the liquid reducing agent is 0°C.

The construction machine according to the above-described embodiment is the hydraulic excavator 1. However, the construction machine according to the present invention is not limited to the hydraulic excavator 1, and may be a wheel loader, crane or the like.

### Brief Description of the Drawings

[FIG. 1] FIG. 1 is a rear and upper left perspective view of a hydraulic excavator as the construction machine according to the one embodiment of the present invention.
[FIG. 2] FIG. 2 is a view showing a layout within an engine compartment as seen in the direction of arrows A-A of FIG. 1.
[FIG. 3] FIG. 3 is a rear and upper left perspective view of the layout of a liquid reducing agent tank and its periphery in the engine compartment.
[FIG. 4] FIG. 4 is an enlarged perspective view of the liquid reducing agent tank and an installation base shown in FIG. 2.
[FIG. 5] FIG. 5 is a front and upper left perspective view of the liquid reducing agent tank and installation base shown in FIG. 2.
[FIG. 6] FIG. 6 is an enlarged, front and upper left view of the liquid reducing agent tank and installation base shown in FIG. 5, with holding members and bolts of fastening means, a supply-side piping and a return-side piping having been removed from the liquid reducing agent tank and installation base.
[FIG. 7] FIG. 7 is a perspective view of the holding member which each fastening means is provided with.
[FIG. 8] FIG. 8 is a diagram depicting a heating device and a controller and the like for controlling the heating device.
[FIG. 9] FIG. 9 is a diagram illustrating an operation that supplies the liquid reducing agent from the liquid reducing agent tank to an NOx reduction agent.

### Legend

- 1: Hydraulic excavator
- 6: Engine compartment
- 25: Diesel engine
- 26: Exhaust pipe
- 27: Oil cooler
- 28: Radiator
- 29: Air cooler
- 32: Cooling fan
- 40: Liquid reducing agent tank
- 80: Heating device
- 90: Temperature sensor
- 91: Controller
- 100: NOx reduction catalyst

## Claims

1. A construction machine provided, within an engine compartment, with a heat exchanger, a cooling fan arranged opposite the heat exchanger to produce a cooling airflow for promoting heat dissipation from the heat exchanger, and a liquid reducing agent tank for storing a liquid reducing agent to be supplied to an NOx reduction catalyst, wherein:
the liquid reducing agent tank is arranged upstream of the heat exchanger as viewed in a flowing direction of the cooling airflow.

2. The construction machine according to claim 1, further comprising a supply port arranged in a lower part of the liquid reducing agent tank to guide the liquid reducing agent to the NOx reduction catalyst, and a heating device for enabling to heat the lower part.

3. The construction machine according to claim 2, further comprising a lower limit temperature detection means for detecting that a temperature of the liquid reducing agent stored in the liquid reducing agent tank is a preset lower limit temperature, an upper limit temperature detection means for detecting that the temperature of the liquid reducing agent is a preset upper limit temperature, and a control means for controlling the heating device based on detection results by the lower limit temperature detection means and detection results by the upper limit temperature detection means, wherein the control means heats the liquid reducing agent at or above the lower limit temperature when the temperature of the liquid reducing agent is equal to or lower than the upper limit temperature.

4. The construction machine according to claim 2 or 3, wherein the liquid reducing agent tank and the heating device are detachably secured as discrete elements on a main body of the construction machine that defines the engine compartment.

5. The construction machine according to anyone of claims 1-4, wherein the liquid reducing agent tank is formed of a corrosion-resistant material.
